# EUROPEAN PATENT APPLICATION

(11) **EP 4 646 924 A1**
(43) Date of publication of application: **12.11.2025**
(21) Application number: 25174652.5
(22) Date of filing: 06.05.2025
(51) Int. Cl.: A01K 1/01

(54) **DEODORANT DEVICE FOR ANIMAL LITTER BOXES AND/OR CAGES AND METHOD OF ELIMINATING ODOURS FOR LITTER BOXES AND/OR CAGES**

(30) Priority: 07.05.2024 IT 202400010201
(71) Applicant: Ferplast S.p.A., 36070 Castelgomberto (VI) (IT)
(72) Inventor: VACCARI, Nicola, 36070 CASTELGOMBERTO (Vicenza) (IT)
(74) Representative: Sandri, Sandro

(57) **Abstract**

A deodorant device (1) for animal litter boxes and/or cages comprising a suction body (2), having at least one inlet opening (5) and at least one outlet opening (6), odour eliminating means (9), activatable on the airflow to be processed (F1) at least to eliminate an odour present therein, generating a processed airflow (F2), and a suction fan (7), configured to draw in the airflow to be processed (F1) from the animal litter box and/or cage through the inlet opening (5) and emit the processed airflow (F2) through the outlet opening (6). Furthermore, the deodorant device (1) comprises a control unit (14) operatively associated with a presence sensor (15) and configured to activate said suction fan (7) as a function of the presence signal, preferably after the animal has come out of the animal litter box and/or cage, and/or to deactivate said suction fan (7) as a function of a presence signal from the presence sensor (15) to prevent the operation of the suction fan (7) while an animal is present inside the animal litter box and/or cage.

## Description

### TECHNICAL FIELD

The present invention relates to a deodorant device for animal litter boxes and/or cages and method of eliminating odours for animal litter boxes and/or cages.

In particular, deodorant devices are configured to manage odours coming from litter boxes or cages generally due to pet droppings so as to eliminate unpleasant odours, contributing to make litter boxes and cages a more comfortable environment for pets. Such devices play an important role in maintaining a healthier environment for both the animals and the owners.

Furthermore, the deodorant devices help to prevent the risk of litter box rejection as pets, in particular cats, tend to avoid the use of litter boxes due to the presence of unpleasant odours.

### STATE OF THE ART

There are different types of deodorant devices on the market today.

For example, ozone deodorant devices allow odours to be eliminated by introducing ozone into the air. Although ozone is effective in eliminating odours, it is, however, very harmful to both human and pet health.

There are also air ionisation deodorant devices. However, such devices are subject to the accumulation of electrostatic energy which can discharge on the pet, frightening it and increasing the risk of litter box rejection. In addition, the ionisation devices can produce ozone as a byproduct and, as previously highlighted, be harmful to the health of the pet.

Some alternative solutions may involve the use of activated carbon through which the air is made to flow to eliminate the odours contained therein and subsequently introduced back into the litter box.

Disadvantageously, such devices have quite big dimensions which determine the need for fixing them to the upper wall of the litter box or cage, thus limiting the spaces for the animal's movement. In particular, the dimensions of such devices severely limit their adaptability to the different conformations of litter boxes and cages.

Disadvantageously, moreover, the performance of such devices is severely limited, as they are not able to generate an effective mixing of the air reintroduced with the air already present in the litter box or in the cage.

Furthermore, very disadvantageously, the noise and vibrations induced by the movement of the air caused by such devices strongly disturb the pet, frightening it and causing it to irretrievably reject the litter box.

### DESCRIPTION OF THE INVENTION

In this context, the technical task underlying the present invention is to propose a deodorant devices for animal litter boxes and/or cages and a method of eliminating odours for litter boxes and/or cages which overcome the aforementioned drawbacks of the prior art.

In particular, it is an object of the present invention to provide a deodorant device for animal litter boxes and/or cages and a method of eliminating odours for litter boxes and/or cages which ensure an increase in the elimination of odours.

A further object of the present invention is to provide a deodorant device for animal litter boxes and/or cages and a method of eliminating odours for litter boxes and/or cages having high operational flexibility.

A further object of the present invention is to provide a deodorant device for animal litter boxes and/or cages and a method of eliminating odours for litter boxes and/or cages which reduce the risk of the litter box and/or cage being rejected by pets.

A further object of the present invention is to provide a deodorant device for animal litter boxes and/or cages and a method of eliminating odours for litter boxes and/or cages which ensure high safety for the animals which use them.

A further object of the present invention is to provide a deodorant device for animal litter boxes and/or cages having particularly limited dimensions.

The stated technical task and specified objects are substantially achieved by a deodorant device for animal litter boxes and/or cages and a method of eliminating odours for litter boxes and/or cages comprising the technical features disclosed in one or more of the accompanying claims.

The dependent claims correspond to possible embodiments of the invention.

### ILLUSTRATION OF THE DRAWINGS

Further features and advantages of the present invention will become more apparent from an approximate, and thus non-limiting, description of a preferred, but non-exclusive embodiment of a deodorant device for animal litter boxes and/or cages and a method of eliminating odours for litter boxes and/or cages, as illustrated in the appended drawings, in which:
- Figure 1 shows a side view of a deodorant device for animal litter boxes and/or cages in accordance with a possible embodiment of the present invention;
- Figure 2 shows a partially exploded, sectional side view of the deodorant device of Figure 1;
- Figure 3- 4 respectively show a front view and a rear view of the deodorant device of Figure 1;
- Figures 5A-5B show respective perspective depictions of a deodorant device for animal litter boxes and/or cages in accordance with a further possible embodiment of the present invention;
- Figures 6A-6B show respective perspective depictions of a deodorant device for animal litter boxes and/or cages in accordance with a further possible embodiment of the present invention;
- Figures 7A-7B show respective perspective depictions of a deodorant device for animal litter boxes and/or cages in accordance with a further possible embodiment of the present invention;
- Figures 8A-8B show respective perspective depictions of a deodorant device for animal litter boxes and/or cages in accordance with a further possible embodiment of the present invention;
- Figures 9A-9B show respective perspective depictions of a deodorant device for animal litter boxes and/or cages in accordance with a further possible embodiment of the present invention.

### DESCRIPTION OF AN EMBODIMENT OF THE INVENTION

With reference to the accompanying figures, the reference number 1 has been used to generally designate a deodorant device for animal litter boxes and/or cages, which will be referred to herein as deodorant device 1.

The deodorant device 1 comprises a suction body 2 adapted to be arranged inside an animal litter box and/or cage.

Preferably, the suction body 2 has a substantially symmetrical shape.

The suction body 2 has at least one inlet opening 5 and at least one outlet opening 6. In particular, the at least one inlet opening 5 is in fluid communication with the at least one outlet opening 6 to allow a passage of an airflow to be processed "F1" through the suction body 2.

Preferably, the at least one inlet opening 5 is defined by a plurality of inlet openings 5 operatively associated to allow an inflow of the airflow to be processed "F1" through the suction body 2.

Furthermore, the deodorant device 1 comprises odour eliminating means 9 activatable on the airflow to be processed "F1" at least to eliminate an odour present therein, generating a processed airflow "F2".

Preferably, the at least one outlet opening 6 can be defined by a plurality of outlet openings 6 operatively associated to allow an outflow of the processed airflow "F2" through the suction body 2.

The deodorant device 1 further comprises a suction fan 7 at least partially, preferably entirely, housed inside the suction body 2.

In particular, the suction fan 7 is operatively associated with the suction body 2 to suck the airflow to be processed "F1" from the animal litter box and/or cage through the at least one inlet opening 5 and emit the processed airflow "F2" through the at least one outlet opening 6 inside the animal litter box and/or cage.

Thereby, the deodorant device 1 promotes an effective mixing of the processed airflow "F2" with the air present in the animal litter box and/or cage, ensuring an increase in the odour elimination efficiency.

Advantageously, the deodorant device 1 comprises a presence sensor 15 configured to detect the presence of an animal inside the animal litter box and/or cage and generate a presence signal representative of the presence of an animal inside the animal litter box and/or cage. Furthermore, the deodorant device 1 comprises a control unit 14 operatively associated with the at least one presence sensor 15. In particular, the control unit 14 can be configured to activate the suction fan 7 as a function of the presence signal, preferably after the animal has come out of the animal litter box and/or cage. Furthermore, the control unit 14 can be configured to deactivate the suction fan 7 as a function of the presence signal to prevent the operation of the suction fan 7 while an animal is present inside the animal litter box and/or cage. Thereby, the present invention prevents the generation of vibrations and noises while a pet is present inside the animal litter box and/or cage, reducing the risk of rejection of the litter box and/or cage by pets. Furthermore, such a solution contributes to increasing the level of safety for the animal as the suction fan 7 is deactivated while the pet is present inside the animal litter box and/or cage.

Preferably, the control unit 14 is also operatively associated with the at least one presence sensor 15 so as to determine an entry of an animal into the animal litter box and/or cage and/or an exit of the animal from the animal litter box and/or cage. In particular, the control unit 14 can be configured to bring about a timed activation and/or deactivation of the suction fan 7 as a function of a preset time interval starting from the entry and/or exit of the animal.

Purely by way of non-limiting example, the control unit can determine by means of a plurality of presence signals of the presence sensor 15 the moment of the animal's entry into the animal litter box and/or cage, the moment of the animal's exit from the animal litter box and/or cage and, therefore, the period in which the animal stays inside the animal litter box and/or cage. Thereby, the control unit can, for example, activate the suction fan 7 as a function of the period during which the animal is present inside the animal litter box and/or cage. In addition, the control unit can, for example, activate the suction fan 7 only when the animal enters and then leaves the animal litter box and/or cage. The control unit can, for example, activate the suction fan 7 and deactivate it after a predetermined period of time. Thereby, the present invention provides a deodorant device 1 having a marked operational flexibility.

That is, the control unit 14 can be configured to activate and/or deactivate the suction fan 7 on the basis of a plurality of operating signals, for example command signals entered by a user and/or preset.

For example, the deodorant device 1 can further comprise, at least one odour sensor configured to detect the presence of odours inside the animal litter box and/or cage and generate an odour signal representative of the presence of an odour inside the animal litter box and/or cage. In particular, the control unit can be operatively associated with the at least one odour sensor and be configured to activate and/or deactivate the suction fan 7 as a function of the odour signal. Thereby, the control unit 14 allows to minimise consumption by increasing the energy efficiency of the deodorant device 1.

Advantageously, the deodorant device 1 can comprise a fixing means, preferably a magnetic fixing means 8, configured to fix the suction body 2 to at least one wall of the animal litter box and/or cage. In particular, the magnetic fixing means 8 guarantees an easy and intuitive reversible connection of the suction body 2 to the wall of the animal litter box and/or cage, conferring particular operating flexibility and adaptability of the deodorant device 1 to the most disparate conformations of the animal litter boxes and/or cages to which it can be applied.

For example, the fixing means 8 can comprise a first fixing element 10 connected or connectable to the suction body 2 and a second fixing element 11 connectable by magnetic interaction to the first fixing element 10 so that, during a condition of the suction body 2 being fixed to the litter box and/or cage, the wall of the litter box and/or cage to which the suction body 2 is fixed is at least partly interposed between the first fixing element 10 and the second fixing element 11.

The first fixing element 10 can be connected or connectable to an anchoring portion of the suction body 2, for example, by form-fitting coupling and/or magnetic interaction.

In accordance with some possible embodiments, the suction body 2 can comprise a plurality of anchoring portions adapted to allow a reversible connection with the first fixing element 10 so as to adapt the positioning of the deodorant device 1 to the geometries and/or dimensions of the litter box and/or cage to which it can be fixed, guaranteeing high operating flexibility and adaptability.

In accordance with a further advantageous aspect, the odour eliminating means 9 can comprise at least one anti-odour portion made at least partially of a material capable of eliminating odours. For example, the anti-odour portion can be made of polymeric material to which activated carbon, microcapsules, enzymes and/or the like is added. Purely by way of non-limiting example, the anti-odour portion can at least partially define the at least one inlet opening 5 and/or the at least one outlet opening 6.

Preferably, the odour eliminating means 9 comprises activated carbon configured to be activated on the airflow to be processed "F1" to generate the processed airflow "F2".

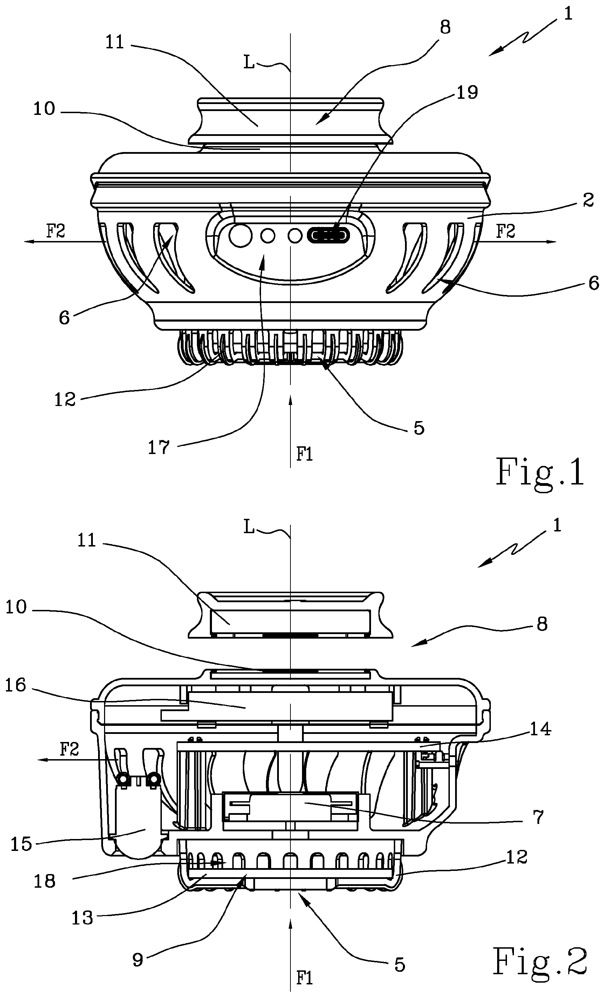

In accordance with a possible embodiment and with particular reference to Figure 2, the odour eliminating means 9 can comprise a sponge body 13 to which activated carbon is added. Furthermore, the spongy body 13 can be soaked or adapted to be soaked with oils and/or fluids adapted to break down and/or absorb and/or mask at least one odour, ensuring a high degree of personalisation to the deodorant device 1.

Furthermore, the deodorant device 1 can comprise a battery power means 16 configured to power at least the suction fan 7 and/or the aforementioned control unit 14, overcoming the need for a wired connection to the electrical current to allow the deodorant device 1 to be powered, giving the present invention a marked operational flexibility. For example, the battery power means 16 can be rechargeable by a USB (Universal Serial Bus) socket 19.

Furthermore, the deodorant device 1 can further comprise light signalling means 17 adapted to indicate an operating state and/or a charge level of the aforementioned battery power means 16 and/or a plurality of further possible operating parameters.

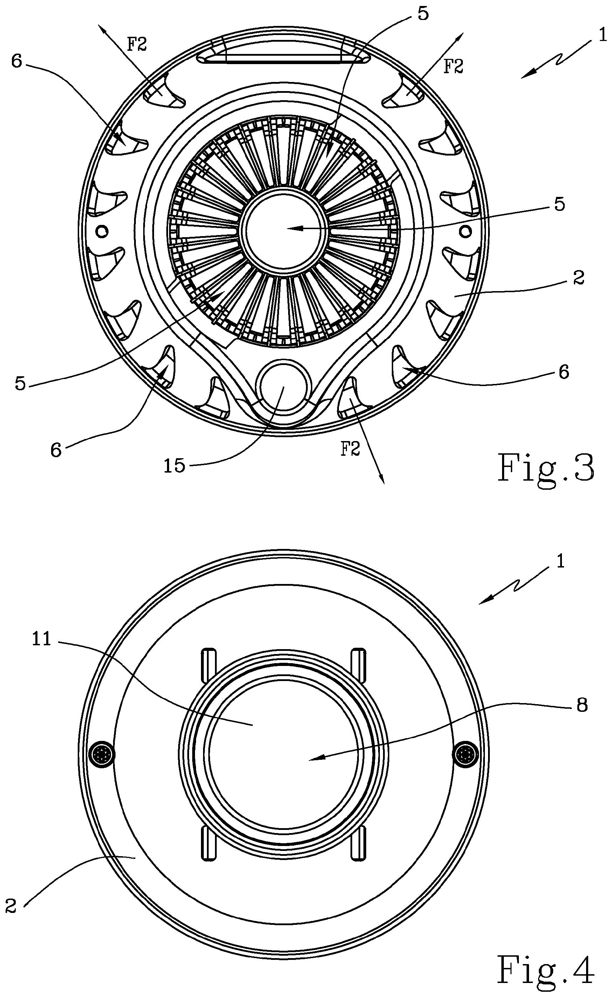

In accordance with some possible embodiments of the present invention and as illustrated in Figures 1-4, the suction fan 7 can be configured to rotate around a rotation axis substantially parallel to a longitudinal extension axis "L" of the suction body 2. In particular, the suction fan 7 can be operatively associated with the suction body 2 to axially suck the airflow to be processed "F1" from the animal litter box and/or cage through the at least one inlet opening 5 and radially emit the processed airflow "F2" through the at least one outlet opening 6 inside the animal litter box and/or cage so that the processed airflow "F2" is at least partially parallel to the fixing plane of the suction body 2. Thereby, the deodorant device 1 can promote an effective mixing of the processed airflow "F2" with the air present in the animal litter box and/or cage, ensuring an increase in the odour elimination efficiency. **In** particular, the processed airflow "F2" can be introduced inside the animal litter box and/or cage along a direction substantially transverse, preferably perpendicular, to the longitudinal extension axis "L". Furthermore, the suction body 2 can have a cylindrical and/or discoidal and/or spherical segment shape with one or two bases. Thereby, as illustrated in Figure 3, the at least one inlet opening 5 can be arranged in a central area of the suction body 2 and the at least one outlet opening 6 can be arranged in a peripheral area of the suction body 2, promoting a substantially homogeneous radial distribution of the processed airflow "F2". Purely by way of non-limiting example, the suction body 2 can extend for a length less than 50 millimetres along the aforementioned longitudinal extension axis "L" and for a length less than 100 millimetres in the radial direction, giving the deodorant device 1 a particular compactness which allows it to reduce the dimensions inside the animal litter box and/or cage. Furthermore, the suction body 2 can comprise a removable element 12 at least partially defining the at least one inlet opening 5. Preferably, the removable element 12 defines a housing 18 adapted to at least partially house the odour eliminating means 9. Thereby, the removable element 12 can allow a replacement and/or a maintenance of the odour eliminating means 9. Advantageously, moreover, the removable element 12 can be reversibly connectable to the suction body 2 by means of form-fitting coupling, preferably a bayonet coupling, greatly facilitating the operations.

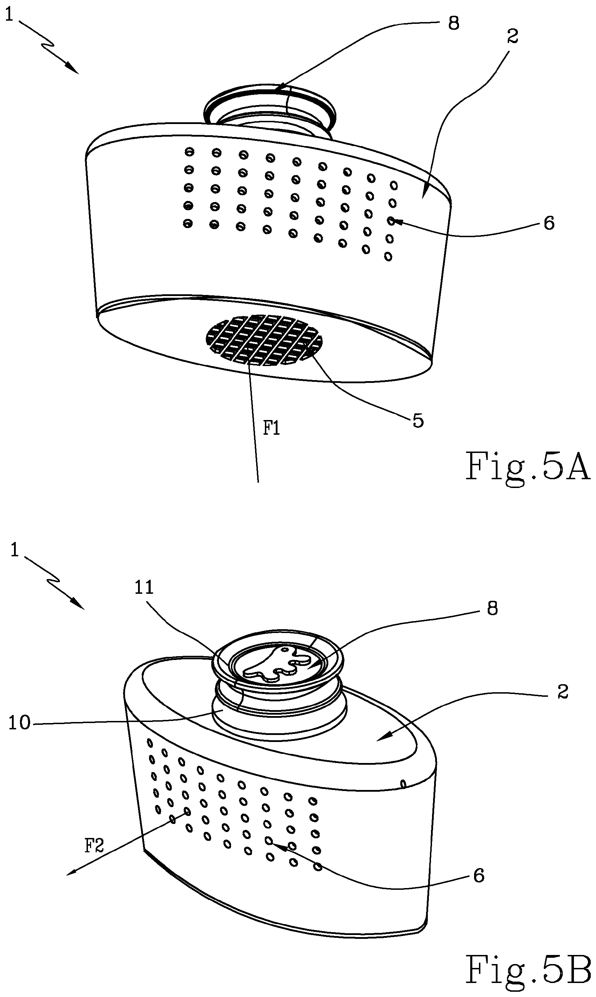

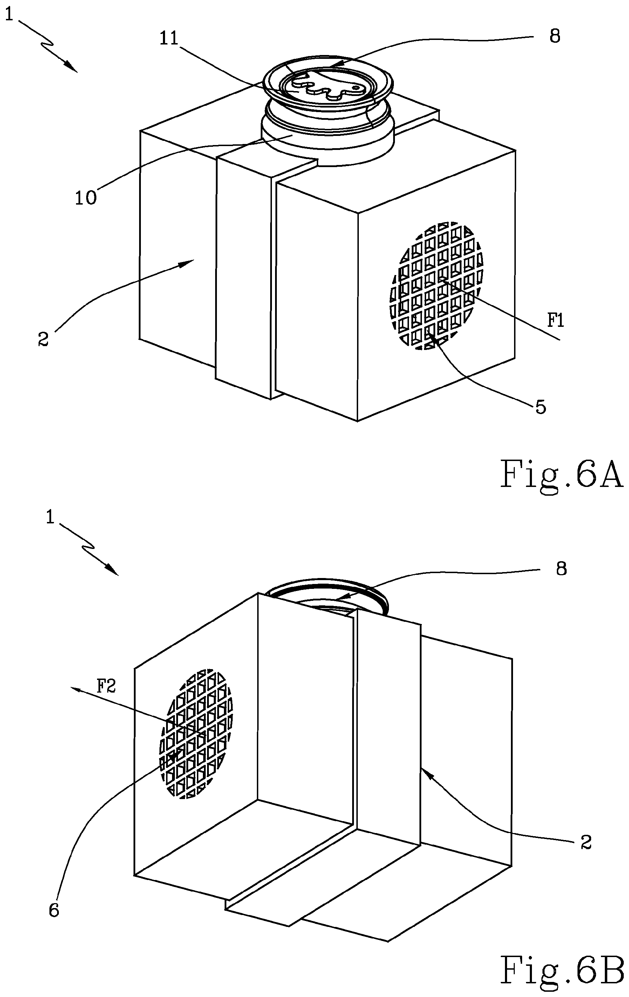

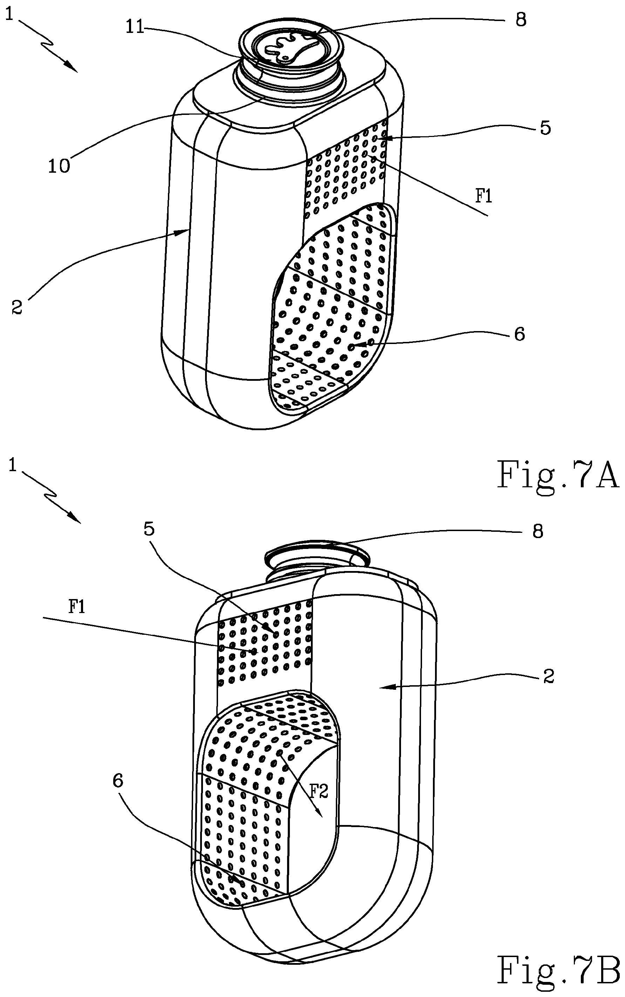

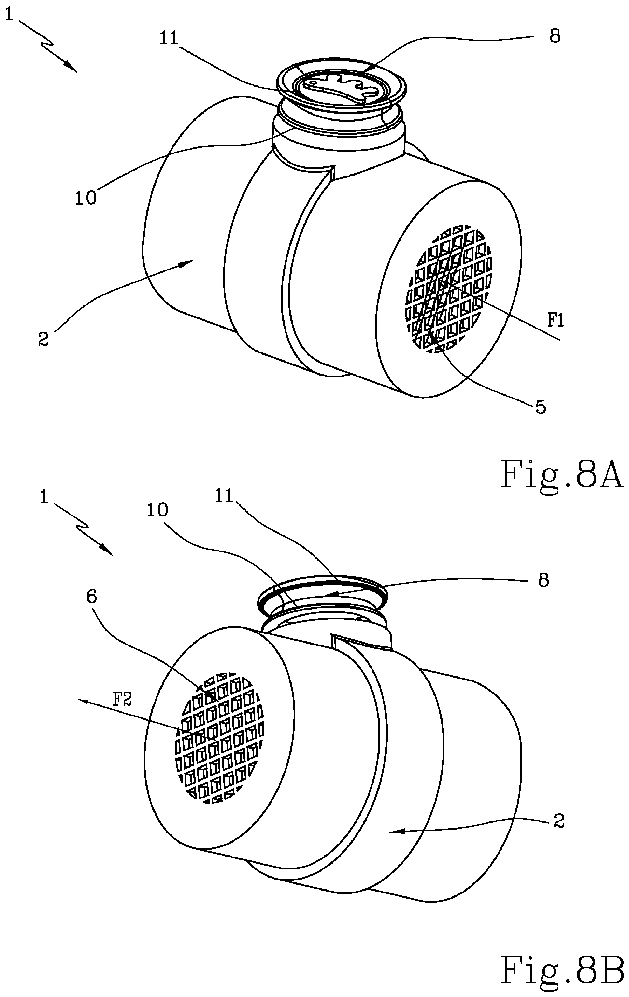

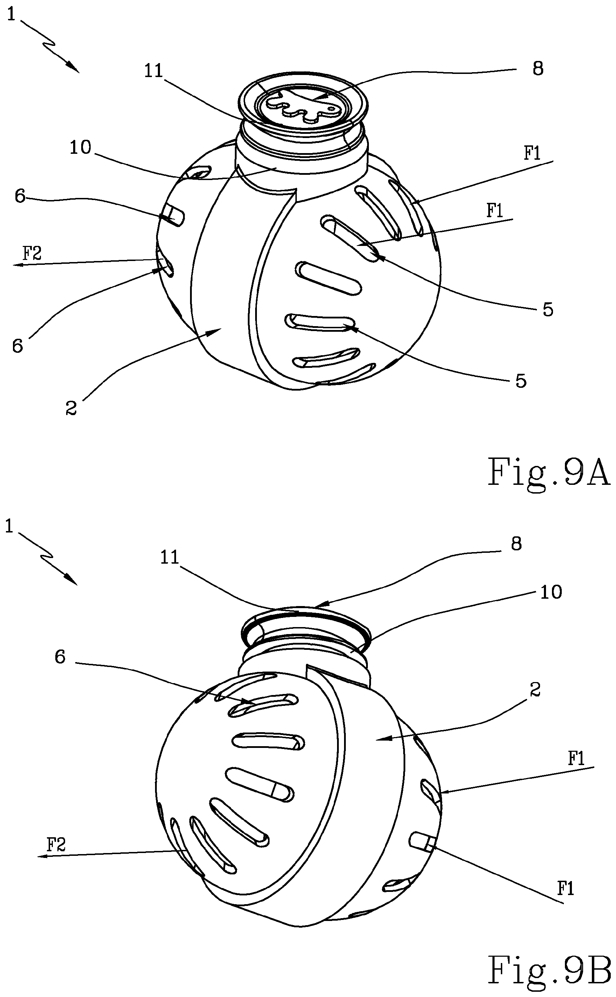

In accordance with further possible embodiments and as shown in figures 5A-9B, the removable element 12 may not be provided and the processed airflow "F2" can be introduced inside the animal litter box and/or cage along one or more different directions. Furthermore, the suction body 2, the at least one inlet opening 5 and/or the at least one outlet opening 6 can have different shapes without the inventive concept underlying the present invention being altered, ensuring the deodorant device 1 has a marked adaptability.

In accordance with a further aspect, the present invention relates to a pet litter box comprising a plurality of walls operatively connected to define an operating volume and a deodorant device 1 in accordance with what has been described above. Advantageously, the deodorant device 1 is reversibly connectable to a wall of the aforementioned plurality of walls so as to ensure an effective elimination of the odours present inside the litter box.

According to a further aspect, the present invention relates to a method of eliminating odours for animal litter boxes and/or cages comprising the step of drawing in an airflow to be processed "F1" present inside an animal litter box and/or cage and a step of eliminating at least one odour present in the airflow to be processed "F1" thereby generating a processed airflow "F2".

Furthermore, the method comprises a step of emitting the processed airflow "F2" into the animal litter box and/or cage.

Advantageously, the method comprises a step of detecting an entry of an animal into the animal litter box and/or cage and the step of blocking the drawing in of the airflow to be processed "F1" and/or the emission of the processed airflow "F2" as a function of said detection to prevent the drawing and/or emission while an animal is present inside the animal litter box and/or cage. Thereby, the present invention allows to overcome the problem of litter box rejection by a pet, for example a cat, ensuring that while the pet is present inside the litter box, the animal is not disturbed or frightened by adverse events or situations such as noises, vibrations, electrostatic currents and/or the like.

Furthermore, the method can comprise the step of detecting an entry of an animal into the animal litter box and/or cage and/or an exit of the animal from the animal litter box and/or cage. In particular, the method can comprise a step of performing a timed suction as a function of a preset time interval starting from the entry and/or exit of the animal.

In accordance with some possible embodiments of the present invention, the method can comprise the step of drawing in the airflow to be processed "F1" along a transverse direction, preferably perpendicular, to at least one wall of an animal litter box and/or cage and/or the step of radially emitting inside the animal litter box and/or cage the processed airflow "F2" in a direction at least partially parallel to the aforementioned wall. Furthermore, the method can comprise a step of conferring to the processed flow "F2" a tangential speed component and/or a speed component directed towards the aforementioned wall so as to promote a mixing of the processed flow "F2" with the air present in the litter box and/or cage.

Preferably, at least one of the steps of the method is achieved by means of a deodorant device 1 in accordance with what is described above.

It is thus noted that the present invention achieves the proposed objects by making a deodorant device for animal litter boxes and/or cages capable of increasing the efficiency in eliminating odours thanks to the presence of a presence sensor and a control unit operatively associated to deactivate the suction fan while an animal is present inside the animal litter box and/or cage.

## Claims

1. A deodorant device (1) for animal litter boxes and/or cages, said device comprising:
- a suction body (2) having at least one inlet opening (5) and at least one outlet opening (6), said at least one inlet opening (5) being in fluid communication with said at least one outlet opening (6) to allow the passage of an airflow to be processed (F1) through said suction body (2);
- odour eliminating means (9) activatable on said airflow to be processed (F1) at least to eliminate an odour present therein, generating a processed airflow (F2);
- a suction fan (7) at least partly housed in said suction body (2), said suction fan (7) being operatively associated with said suction body (2) so as to draw in from the animal litter box and/or cage the airflow to be processed (F1) through said at least one inlet opening (5) and emit said processed airflow (F2) through said at least one outlet opening (6);
- at least one presence sensor (15) configured to detect the presence of an animal inside the animal litter box and/or cage and generate a presence signal representative of the presence of an animal inside the animal litter box and/or cage;
- a control unit (14) operatively associated with said at least one presence sensor (15), said control unit (14) being configured to activate said suction fan (7) as a function of said presence signal, preferably after the animal has come out of the animal litter box and/or cage, and/or to deactivate said suction fan (7) as a function of said presence signal to prevent the operation of said suction fan (7) while an animal is present inside the animal litter box and/or cage.

2. The deodorant device in accordance with claim 1, wherein the control unit (14) is operatively associated with said at least one presence sensor (15) so as to determine an entry of an animal into the animal litter box and/or cage and/or an exit of the animal from the animal litter box and/or cage; and wherein said control unit (14) is configured to bring about a timed activation and/or deactivation of said suction fan (7) according to a preset time interval starting from the entry and/or exit of the animal.

3. The deodorant device in accordance with claim 1 or 2, comprising a magnetic fixing means (8) configured to fix said suction body (2) to at least one wall of the animal litter box and/or cage.

4. The deodorant device in accordance with claim 3, wherein said magnetic fixing means (8) comprises a first fixing element (10) connected or connectable to said suction body (2) and a second fixing element (11) connectable by magnetic interaction to said first fixing element (10) so that, during a condition of said suction body (2) being fixed to the litter box and/or cage, one wall of the litter box and/or cage is at least partly interposed between said first fixing element (10) and said second fixing element (11).

5. The deodorant device in accordance with claim 4, wherein said suction body (2) comprises a plurality of anchorage portions adapted to enable a reversible connection with said first fixing element (10), said anchorage portions preferably being configured to create a form-fitting coupling and/or by magnetic interaction with said first fixing element (10).

6. The deodorant device in accordance with one or more of the preceding claims, wherein said odour eliminating means (9) comprises at least one anti-odour portion made at least partially of a material capable of eliminating odours, said anti-odour portion at least partly defining said at least one inlet opening (5) and/or said at least one outlet opening (6).

7. The deodorant device in accordance with one or more of the preceding claims, wherein said odour eliminating means (9) comprises a spongy body (13) to which activated carbon is added or can be added, said spongy body (13) preferably being adapted to be soaked with oils and/or fluids adapted to eliminate and/or absorb and/or mask at least one odour.

8. The deodorant device in accordance with one or more of the preceding claims, comprising a battery power means (16) configured to power at least said suction fan (7).

9. The deodorant device in accordance with one or more of the preceding claims, comprising at least one odour sensor configured to detect the presence of odours inside the animal litter box and/or cage and to generate an odour signal representative of the presence of an odour inside the animal litter box and/or cage; and wherein said control unit (14) is operatively associated with said at least one odour sensor and configured to activate and/or deactivate said suction fan (7) as a function of said odour signal.

10. A method of eliminating odours for animal litter boxes and/or cages comprising the steps of:
- drawing in an airflow to be processed (F1) present inside an animal litter box and/or cage;
- eliminating at least one odour present in said airflow to be processed (F1), thereby generating a processed airflow (F2);
- emitting said processed airflow (F2) into the animal litter box and/or cage;
- detecting an entry of an animal into the animal litter box and/or cage;
- blocking said drawing in and/or said emission as a function of said detection to prevent said drawing in and/or said emission while an animal is present inside the animal litter box and/or cage.
